**Europäisches Patentamt**

(19) **European Patent Office**

**Office européen des brevets**

(11) Publication number: **0 001 875**
**B1**

(12) **EUROPEAN PATENT SPECIFICATION**

(45) Date of publication of patent specification: **04.08.82**

(51) Int. Cl.³: **C 08 J 5/12, C 09 J 3/14**

(21) Application number: **78300286.8**

(22) Date of filing: **04.08.78**

(54) Process for bonding low-energy plastic surfaces.

(30) Priority: **03.11.77 US 848283**

(43) Date of publication of application:
**16.05.79 Bulletin 79/10**

(45) Publication of the grant of the patent:
**04.08.82 Bulletin 82/31**

(84) Designated Contracting States:
**BE DE FR GB SE**

(56) References cited:
**CHEMICAL ABSTRACTS, vol. 84, no. 14, April 5, 1976, page 43, abstract no. 91125t**

(73) Proprietor: **Gulf Oil Corporation**
**P. O. Box 1166**
**Pittsburgh Pennsylvania 15230 (US)**

(72) Inventor: **Lakshmanan, Pallavoor R.**
**15311 Ripplestream**
**Houston Texas 77068 (US)**

(74) Representative: **Fitzpatrick, Alan James**
**FITZPATRICKS 48 St. Vincent Street**
**Glasgow G2 5TT (GB)**

## Process for bonding low-energy plastic surfaces

This invention relates to a process for bonding low-energy plastic surfaces using a hot melt adhesive.

Ordinarily, adhesive bonding of low-energy plastic surfaces to each other requires some form of surface treatment prior to application of an adhesive to obtain high bond strengths between the surfaces so contacted. Low-energy plastic surfaces bonded to each other without prior surface treatment, such as by relatively weak, tacky adhesives, are inadequate for many purposes.

For strong bonds involving low-energy plastic surfaces some form of surface treatment or etching is required prior to application of an adhesive. Surface pretreatment of low-energy plastic surfaces, for example, involves either acid etching with sulfuric, nitric, chromic acids or mixtures thereof, or flame treatment, corona discharge treatment, treatment with plasma jets or low and high energy radiation.

Consequently, a need exists for a much simpler process for bonding low-energy plastic surfaces. In accordance with the present invention a novel hot melt adhesive composition process is provided which requires minimal heating of the surfaces to be bonded together and maximum bond strength in a matter of minutes or a few hours without resort to elaborate post-curing procedures. Further, the process of the present invention provides rapid assembly of components and immediate handling of the assembled parts. Another surprising advantage of the present invention is that the bonds so formed can deliver improved tensile lap shear strengths.

Hot melt adhesives which contain ethylene-vinyl ester copolymers blended with tackifiers and wax are known for use in bonding plastic surfaces.

Japanese Patent No. 50-28969 discloses the use of a hot melt adhesive which can be used on plastics materials with or without pretreatment of the surfaces to be stuck. The adhesive contains an ethylene-vinyl acetate copolymer, a polypropylene wax and a hydrogenated rosin type ester in proportions of 10 to 200 parts by weight of the wax and 40 to 250 parts of the ester to each 100 parts of the copolymer.

According to the present invention there is provided a process for bonding low-energy plastic surfaces having a surface tension of from 24 to 37 millineutrons per metre (dynes per centimeter) to each other comprising applying to at least one of the surfaces to be bonded an adhesive composition which comprises (1) an ethylene-vinyl ester copolymer having from 4 to 50 weight percent of a vinyl ester; (2) a tackifier; and (3) a wax, and wherein said adhesive composition is at a temperature of from 90 to 250°C at the time of application and bringing the surfaces into contact with each other characterised in that the surfaces to be bonded are heated to and maintained at a temperature of at least 50°C during application of the adhesive, and that said wax is selected from a microcrystalline wax, a paraffin wax, an intermediate wax and polyethylene, an intermediate wax being a hybrid material having physical and functional properties intermediate those of fully refined paraffin waxes and microcrystalline waxes.

The process of the present invention is a hot melt adhesive bonding process for specific adhesive compositions and surfaces, that is, low-energy plastic surfaces, which can include, for example, polyolefins and/or modified polyolefins, especially polyethylene and polypropylene. For purposes of the present invention a low-energy plastic surface is defined as one which has a surface tension ($\gamma c$) of from 24 to 37 mN/m (dynes/cm). For example, polyethylene ranges from about 25.5 to about 36 mN/m (dynes/cm), and polypropylene ranges from about 24 to about 34 mN/m (dynes/cm).

A particularly preferred embodiment of the invention comprises a process wherein said ethylene-vinyl ester copolymer is selected from ethylene-vinyl acetate, ethylene-vinyl formate, ethylene-vinyl propionate, ethylene-vinyl butyrate and mixtures thereof; said tackifier is selected from (a) a rosin, (b) a rosin ester, (c) a terpene resin, (d) a terpene-phenolic resin, (e) a rosin-modified phenolic resin and (f) a petroleum resin; and said wax is selected from a microcrystalline wax, a paraffin wax, an intermediate wax, (as herein defined) and polyethylene.

Preferably said ethylene-vinyl ester copolymer has a melt index of from 0.5 to 500; said tackifier has a softening point of from 40 to 150°C; and said wax is polyethylene.

The process for bonding low-energy plastic surfaces involves heating said surfaces which are to be bonded to each other to a temperature of at least 50°C, preferably from 60 to 130°C, followed by an application to at least one of the surfaces the adhesive composition defined above, the adhesive composition being at a temperature of from 90 to 250°C, preferably from 120 to 220°C, Then the surfaces are brought in contact with each other. After assembly the bond reaches a maximum tensile strength in a matter of minutes or few hours. No post-curing is required and therefore, rapid assembly and handling of assembled parts is possible.

Adhesive compositions which are employed with the process of the present invention contain one or more specific ethylene-vinyl ester copolymers, a tackifier, and a wax.

Ethylene-vinyl ester copolymers that can be used herein include vinyl esters having from 2 to 4 carbon atoms. Examples of suitable ethylene-vinyl ester copolymers are ethylene-vinyl acetate, ethylene-vinyl formate, ethylene-vinyl propionate, ethylene-vinyl butyrate and mixtures thereof. The copolymer contains from 4 to 50 weight percent, preferably from 5 to 40 weight percent, of a vinyl ester, and can have a melt index as measured by ASTM 1238-52T of from 0.5 to 500, preferably 200 to 400. These copolymers can be prepared by any method generally employed in the art, for example, preparation such as that taught in U.S. Patent Nos. 2,200,429 to Perrin et al and 2,703,794 to Roedel. In the present invention blends, or mixtures, of ethylene-vinyl ester copolymers are sometimes used to obtain a melt index within the desired range. For example, if blends or mixtures of ethylene-vinyl ester copolymers are employed, individual ethylene vinyl ester copolymers can be used even if they do not have the melt index defined above, provided the resulting mixture has a melt index within the defined range. ASTM means American Society for Testing and Materials.

As contemplated in the present invention any tackifier known in the art can be employed herein. Particularly, suitable tackifiers, for example, can be selected from (a) a rosin, (b) a rosin ester, (c) a terpene resin, (d) a terpene-phenolic resin, (e) a rosin-modified phenolic resin and (f) a petroleum resin. Tackifiers which are present in the adhesive composition serve to extend the adhesive properties of the ethylene-vinyl ester copolymer. Tackifiers for use in the present invention may have a softening point in the range of 40 to 150°C, preferably 65 to 135°C. Small amounts of tackifiers having a softening point of less than 40°C, or higher than 150°C, can be mixed or blended with tackifiers in the desired range to give desirable results; however, tackifier blends having a tackifier with a softening point of less than 40°C and higher than 150°C are not preferred in the invention as set forth. Examples of rosins and rosin esters in the hot melt system include both natural and modified rosins, such as, for example, gum rosin, wood rosin, tall oil rosin, distilled rosin, hydrogenated rosin, dimerized rosin, disproportionated rosin and polymerized rosin; glycerine and pentaerythritol esters of rosin, including stabilized, hydrogenated, polymerized, disproportionated, dimerized and unmodified rosin. Terpene resins sometimes called polyterpene resins, result from polymerization of terpene hydrocarbons, such as bicyclic monoterpene known as pinene, in the presence of a Friedel-Crafts catalyst at moderately low temperatures. Terpene resins effective for the adhesive composition may have a softening point as measured by ASTM E28-58T of from 40 to 135°C. Another example of a suitable terpene resin is a polymerized beta-pinene. Terpene-phenolic resins can include, for example, the product resulting from the condensation of bicyclic terpene, in an acidic medium and/or terpene alcohol with phenol. Rosin-modified phenolic resins can include, for example, the reaction products of rosin with phenolformaldehyde condensate. Petroleum resins can include, for example, low molecular weight polymers and copolymers of styrene and vinyl toluene. Rosin and rosin esters can be prepared, for example, according to the methods described in the Encyclopedia of Polymer Science and Technology, Interscience Publishers, a Division of John Wiley & Sons (New York; 1964), Volume 12, pp. 139—164; terpene resins can be prepared, for example, according to the methods described in Volume 13, pp. 575—596 of the same publication. Terpene-phenolic resins and rosin-modified phenolic resins can be prepared, for example, according to the methods described in Organic Coating Technology, H. F. Payne, John Wiley & Sons (New York; 1954), Volume 1, pp. 183—184 and 168—170, respectively. Petroleum resins can be prepared, for example, according to methods described in the Encyclopedia of Polymer Science and Technology, Interscience Publishers, a Division of John Wiley & Sons (New York; 1968), Volume 9 pp. 853—860.

The adhesive composition for use in the present invention also contains a microcrystalline wax, a paraffin wax, an intermediate wax i.e. a hybrid material derived from heavy waxy distillates and having physical and functional properties intermediate to those of fully refined paraffin waxes and microcrystalline waxes; or a polyethylene wax. Microcrystalline waxes can include, for example, branched-chain hydrocarbons and alkylcycloaliphatic (naphthenic hydrocarbons) as well as straight-chain hydrocarbons whose molecular weight range is from 400 to 800, as defined, for example, in the Encyclopedia of Polymer Science and Technology, Interscience Publishers, a Division of John Wiley (New York; 1971) Vol. 14, pp. 770—771. Intermediate waxes are generally characterized by a melting point of from 65.5°C to 71.1°C (150 to 160°F) as measured by ASTM-D87; a viscosity, SUS at 99°C (210°F) of 51.7; and a molecular weight of from 500 to 650. Suitable polyethylene in the present invention has an average molecular weight of from 600 to 40,000, preferably 600 to 3000, and most preferably 900 to 2500. Polyethylenes useful as waxes in the present invention can be linear or branched, preferably linear, that is at least 70 percent of the molecules are linear or paraffinic; preferably at least 90 percent are linear. The n-paraffin or n-alkane content of hydrocarbon waxes can be determined by molecular sieve adsorption or by urea adduction. The penetration or hardness of the wax at 25°C may be 0.25 to 1.5, preferably 0.75 to 1.00 as determined by ASTM-D 1321. The density at 25°C of the polyethylene wax employed in the present invention may be 0.93 to 0.97 g/cc, preferably 0.94 to 0.96 g/cc. Each of the enumerated parameters are interrelated as is readily apparent to one of ordinary skill in the art. Polyethylene waxes can be obtained, for example, by the low pressure polymerization of ethylene using Ziegler catalysts.

If desired, other components generally added to an adhesive composition for a particular purpose can also be present in an amount of about 0.1 to about 5, preferably about 0.2 to about 2, weight percent based on the weight of the final composition. An example of such an additive can include an antioxidant such as 1,3,5-trimethyl-2,4,6-tris(3,5-ditertiarybutyl-4-hydroxybenzyl)benzene.

In general, particularly preferred adhesive compositions which can be employed in the invention

# 0 001 875

defined and claimed herein can have the following components in the following amounts as set forth in Table 1.

TABLE 1:

## Adhesive Composition

|  | Broad Range wt% | Preferred Range wt% |
|---|---|---|
| Ethylene-vinyl ester copolymer | 15 to 55 | 25 to 55 |
| Tackifier | 25 to 45 | 25 to 40 |
| Wax | 5 to 60 | 10 to 50 |

The adhesive composition can be prepared in any conventional manner. Thus, for example, a preferred procedure involves the use of a so-called melt mixing technique in which the wax (diluent) together with an antioxidant, if used, is maintained in a stirred molten state at a temperature between about 130 to about 230°C, preferably between about 140 to about 170°C, during which time the tackifier is added followed by the addition by the ethylene-vinyl ester copolymer. Mixing is continued until a homogeneous mixture is obtained, approximately after about 15 minutes to about 4 hours.

The invention will be further described with reference to the experimental data.

Adhesive compositions were prepared as follows. A wax, in an amount sufficient to make a 200.4-gram batch of adhesive, was mixed with an antioxidant, 1,3,5-trimethyl-2,4,6-tris(3,5-ditertiary-butyl-4-hydroxybenzyl)benzene was used in all experiments herein. The wax-antioxidant mixture was placed in a jacketed 400-ml capacity Brabender Plasticorder and kept hot by an oil bath heated to approximately 145 to about 155°C. At a slow, 50-rpm blade setting, the wax-antioxidant mixture was melted and then the tackifier was added while mixing continued. Continued mixing produced a fluid wax-antioxidant-tackifier mixture. An ethylene-vinyl ester copolymer was added to the fluid wax-antioxidant-tackifier mixture in the order of high melt index copolymer followed by low melt index copolymer. Mixing was continued at a top speed setting of the blades at approximately 150 rpm for approximately 10 to about 15 minutes until homogeneity occurred, and then the speed was decreased to 100 rpm and the composition was mixed for approximately 5 minutes. On completion of mixing, the torque generally levelled-off, and the adhesive composition was ready to be poured. Total mixing time was about 15 to about 20 minutes.

Low-energy plastic test specimens were prepared in accordance with the following procedure. Test strips having a dimension of 2.54×7.5×0.31 cm (1×3×1/8 inch) or 2.54×7.5×0.45 cm (1×3×3/16 in.) were used in the preparation of tensile lap shear strength test specimens. The strips were cleaned with acetone rinse and wiped dry. The test strips (two for each test specimen) were then exposed to an infra-red lamp to heat the surface to between about 80 to about 100°C. Molten adhesive at temperatures between about 176 to about 190°C was applied as a 0.31 cm (1/8-inch) bead over 6.45 cm² (a square inch) area on one of the test strips. A lap shear strength specimen was prepared immediately following application of the adhesive composition by quickly placing another strip over the adhesive with the heated side of the strip on the adhesive to provide 6.45 cm² (a square inch) lap. Manual pressure was used to spread the adhesive over the bonded area. A 500-gram weight was then placed on the bonded area and left for about 5 minutes, to maintain contact of the surfaces during initial cooling, after which it was removed. The specimen was cooled to 23°C and excess adhesive was removed. The specimen was stored overnight prior to testing. At least two specimens were prepared for each evaluation and the values reported as an average of the two for a given test run.

The method used for testing the adhesive bond strength was the tensile lap shear method with modifications as described in U.S. Patent No. 3,393,175 at columns 2 through 3. The values for lap shear were measured by determining on an Instron (Trade Mark) the force required to break the bond. As a modification employed herein, the rate of extension was 5 cm (2 inches) per minute. The force divided by the area of the bond gives the lap shear in pounds per square inch.

A series of runs was carried out using the compositions set forth in the upper portion of Table 2 to demonstrate the effect of surface temperature on bond strength of various adhesive compositions as determined by tensile lap shear strength.

4

TABLE 2:

| Effect of Surface Temperature | | | |
| --- | --- | --- | --- |
| Run No. | 1 | 2 | 3 |
| Composition, parts by weight[1] | | | |
| Ethylene-vinyl acetate copolymer,[2] 10% vinyl acetate, melt index 70 | 35 | 35 | 35 |
| Glycerine ester of tall oil rosin,[3] softening point 83°C | 35 | — | — |
| Glycerine ester of stabilized rosin,[4] softening point 83°C | — | 35 | — |
| Styrene-isobutylene copolymer,[5] softening point 76°C | — | — | 35 |
| Microcrystalline wax,[6] melting point 82.2°C | 30 | 30 | 30 |
| Inspections | | | |
| Viscosity, cps[8] at 350°F (176.6°C) | 1830 | 1750 | 3930 |
| Tensile lap shear psi (kg/cm$^2$) | | | |
| HDPE/HDPE[7]   Surface at 25°C | 200 (14.06) | 272 (19.12) | 174 (12.23) |
| Surface at 93°C | 428 (30.09) | 467 (32.84) | 330 (23.20) |

[1]Optional antioxidant, for example, 0.2 parts by weight 1,3,5-trimethyl-2,4,6-tris(3,5-ditertiary-butyl-4-hydroxybenzyl)benzene was used in all experiments herein.
[2]Sumitate DB-10 from Sumitomo Chemical Company.
[3]Zonester 85 from Arizona Chemical Company.
[4]Staybelite Ester 10 from Hercules, Inc. (Staybelite is a Trade Mark.)
[5]Klyrvel 75 from Velsicol Chemical Company. (Klyrvel is a Trade Mark.)
[6]Multiwax 180M from Witco Chemicals.
[7]High density polyethylene.
[8]Cps is equivalent to mPa . s.

It can be seen from Table 2 that the temperature of the plastic surface is critical when the adhesive is applied thereto if an acceptable tensile lap shear strength is to be obtained. When the surfaces were 25°C, in Run Nos. 1, 2 and 3, the tensile lap shear was 200, 272, and 174, respectively; however, when the temperature of the plastic surface was maintained at 93°C when the adhesive was applied, a tensile lap shear strength of 428, 467 and 330 respectively was obtained.

A series of runs was carried out using varying adhesive compositions set forth in the upper portion of Table 3 to demonstrate improved tensile lap shear strength with a variety of low-energy plastic surfaces to be bonded.

TABLE 3:

| Effect of Surface Temperature | | | | |
| --- | --- | --- | --- | --- |
| Run No. | 4 | 5[12] | 6 | 7 |
| Composition, parts by weight[1] | | | | |
| Ethylene-vinyl acetate copolymer,[2] 28 wt% vinyl acetate; melt index 25 | 40 | — | — | — |
| Ethylene-vinyl acetate copolymer,[3] 18 wt% vinyl acetate, melt index 8.8 | — | 40 | — | — |
| Ethylene-vinyl acetate copolymer, 10% wt% vinyl acetate; melt index 70 | — | — | 35 | 35 |
| Terpene resin,[4] softening point 115°C | 40 | — | — | — |
| Glycerine ester of stabilized Rosin, softening point 83°C | — | 40 | — | — |
| Glycerine ester of tall oil rosin | — | — | 35 | — |
| Terpene-phenolic resin,[5] softening point 115°C | — | — | — | 35 |
| Microcrystalline wax, melting point 82.2°C | 20 | — | 30 | 30 |
| Polyethylene wax[6] melting point 120°C | — | 20 | — | — |

5

TABLE 3: Continued

| Run No. | | 4 | 5 | 6 | 7 |
|---|---|---|---|---|---|
| Inspections | | | | | |
| Viscosity, cps[13] at 350°F (176.6°C) | | 7750 | 19500 | 1830 | 1950 |
| Tensile lap shear, psi (kg/cm²)[11] | | | | | |
| HDPE/HDPE | Surface at 25°C | 212 (14.90) | 141 (9.9) | — | 102 (7.17) |
| | Surface at 90°C | 402 (28.27) | 853 (59.98) | — | 348 (24.47) |
| LDPE/LDPE[7] | Surface at 23°C | 134 (9.4) | — | — | — |
| | Surface at 80°C | 150 (10.54) | — | — | — |
| UHMW PE/UHMW PE[8] | Surface at 23°C | 277 (19.4) | — | 162 (11.4) | — |
| | Surface at 100°C | 304 (21.3) | — | 361 (25.38) | — |
| PP/PP[9] | Surface at 23°C | — | — | 231 (16.24) | 134 (9.42) |
| | Surface at 100°C | — | — | 334 (23.4)[10] | 280 (19.69)[10] |

[1]See Table 2, footnote #1.
[2]Elvax 250 purchased frcm E. I. DuPont. (Elvax is a Trade Mark.)
[3]1:3 blend of Elvax 410 to Elvax 460 purchased from E. I. DuPont.
[4]Nirez 1115 purchased from Reichhold Chemicals. (Nirez is a Trade Mark.)
[5]LTP-115 purchased from Pennsylvania Industrial Chemical Corporation.
[6]Vebawax 616 purchased from Veba-Chemie.
[7]Low density polyethylene.
[8]Ultra high molecular weight polyethylene.
[9]Polypropylene.
[10]Substrate deformed.
[11]Substrate thickness 1/8 inch (0.317 cm); adhesive temperature 190°C.
[12]0.5 parts butylated hydroxy toluene added to the composition.
[13]See footnote 8 to Table 2.

It can be seen from the data set forth in Table 3 that the adhesive compositions showed improved tensile lap shear strength on high density polyethylene, low density polyethylene, ultra high molecular weight polyethylene and polypropylene low-energy plastic surfaces heated to a temperature above 50°C.

Our copending European Applications Nos. 78300289.2 (Publication No. 0001878) and 78300288.4 (Publication No. 0001877) also relate to the bonding of plastics using hot melt adhesives.

## Claims

1. A process for bonding low-energy plastic surfaces having a surface tension of from 24 to 37 millineutrons per metre (dynes per centimeter) to each other comprising applying to at least one of the surfaces to be bonded an adhesive composition which comprises (1) an ethylene-vinyl ester copolymer having from 4 to 50 weight percent of a vinyl ester; (2) a tackifier; and (3) a wax, and wherein said adhesive composition is at a temperature of from 90 to 250°C at the time of application and bringing the surfaces into contact with each other, characterised in that the surfaces to be bonded are heated to and maintained at a temperature of at least 50°C during application of the adhesive, and that said wax is selected from a microcrystalline wax, a paraffin wax, an intermediate wax, and polyethylene, an intermediate wax being a hybrid material having physical and functional properties intermediate those of fully refined paraffin waxes and microcrystalline waxes.

2. A process according to Claim 1, wherein said low-energy plastic surface is polyethylene.

3. A process according to Claim 1, wherein said low-energy plastic surface is polypropylene.

4. A process according to Claim 1, wherein said adhesive composition is at a temperature of from 120 to 220°C at the time of application.

5. A process according to Claim 1, wherein said surfaces are heated to a temperature of from 60 to 130°C.

6. A process according to Claim 1, wherein in said adhesive composition said ethylene-vinyl ester copolymer is from 15 to 55 weight percent; said tackifier is from 25 to 45 weight percent; and said wax is from 5 to 60 weight percent of the total composition.

7. A process according to Claim 1, wherein in said adhesive composition said ethylene-vinyl ester copolymer is from 25 to 55 weight percent; said tackifier is frcm 25 to 40 weight percent; and said wax is from 10 to 50 weight percent of the total composition.

8. A process according to Claim 1, wherein said ethylene-vinyl ester copolymer is selected from ethylene-vinyl acetate, ethylene-vinyl formate, ethylene-vinyl propionate, ethylene-vinyl butyrate and mixtures thereof; said tackifier is selected from (a) a rosin, (b) a rosin ester, (c) a terpene resin, (d) a terpene-phenolic resin, (e) a rosin-modified phenolic resin and (f) a petroleum resin; and said wax is selected from ·a microcrystalline wax, a paraffin wax, an intermediate wax and polyethylene, an intermediate wax being a hybrid material having physical and functional properties intermediate those of fully refined paraffin waxes and microcrystalline waxes.

9. A process according to Claim 1, wherein said ethylene-vinyl ester copolymer has a melt index of from 0.5 to 500; said tackifier has a softening point of from 40 to 150°C; and said wax is polyethylene.

**Patentansprüche**

1. Prozeß zum Aneinanderbinden von Plastikoberflächen geringer Oberflächenenergie, die untereinander eine Oberflächenspannung zwischen 24 und 37 Millinewton pro Meter (dyn pro cm) haben, der daraus besteht, daß auf mindestens eine der Oberflächen, die aneinandergebunden werden sollen, ein Klebstoffgemisch aufgebracht wird, das besteht aus (1) einem Äthylen-Vinyl-Ester-Kopolymer, das zwischen 4 und 50 Gewichtsprozent eines Vinyl-Esters enthält; (2) einem Klebrigmacher; und (3) einem Wachs, wobei besagtes Klebstoffgemisch zum Zeitpunkt des Aufbringens auf die Oberfläche und des Aneinanderdrückens der Oberflächen eine Temperatur zwischen 90 und 250°C hat, gekennzeichnet dadurch, daß die zu bindenden Oberflächen während des Aufbringens des Klebstoffgemisches auf eine Temperatur von mindestens 50°C erhitzt werden und auf dieser Temperatur gehalten werden, und dadurch, daß das besagte Wachs ausgewählt wird aus einem mikrokristallinen Wachs, einem Parrafinwachs, einem Wachs im Zwischenzustand und Polyäthylen, wobei ein Wachs im Zwischenzustand ein hybrides Material ist, das physikalische und funktionale Eigenschaften hat, die zwischen denen völlig raffinierter Wachse und denen mikrokristalliner Wachse liegen.

2. Prozeß nach Anspruch 1, wobei die besagte Plastikoberfläche geringer Oberflächenenergie Polyäthylen ist.

3. Prozeß nach Anspruch 1, wobei die besagte Plastikoberfläche geringer Oberflächenenergie Polypropylen ist.

4. Prozeß nach Anspruch 1, wobei das besagte Klebstoffgemisch zum Zeitpunkt des Aufbringens eine Temperatur zwischen 120 und 220°C hat.

5. Prozeß nach Anspruch 1, wobei die besagten Oberflächen auf eine Temperatur zwischen 60 und 130°C erhitzt werden.

6. Prozeß nach Anspruch 1, wobei in dem besagten Klebstoffgemisch das besagte Äthylen-Vinyl-Ester-Kopolymer zwischen 15 und 55 Gewichtsprozent, der besagte Klebrigmacher zwischen 25 und 45 Gewichtsprozent und das besagte Wachs zwischen 5 und 60 Gewichtsprozent des Gesamtgewichts ausmachen.

7. Prozeß nach Anspruch 1, wobei in dem besagten Klebstoffgemisch das besagte Äthylen-Vinyl-Ester-Kopolymer zwischen 25 und 55 Gewichtsprozent, der besagte Klebrigmacher zwischen 25 und 40 Gewichtsprozent und das besagte Wachs zwischen 10 und 50 Gewichtsprozent des Gesamtgemisches ausmachen.

8. Prozeß nach Anspruch 1, wobei das besagte Äthylen-Vinyl-Ester-Kopolymer ausgewählt wird aus: Äthylen-Vinyl-Azetat, Äthylen-Vinyl-Formiat, Äthylen-Vinyl-Propiat, Äthylen-Vinyl-Butyrat und Mischungen aus diesen; wobei der besagte Klebrigmacher ausgewählt wird aus (a) einem Terpentinharz, (b) einem Terpentinharzester, (c) einem Terpenharz, (d) einem Terpenphenolharz, (e) einem terpentinharzartigen Phenolharz und (f) einem Petroleumharz; wobei das besagte Harz ausgewählt ist aus einem mikrokristallinen Wachs, einem Parrafinwachs, einem Wachs im Zwischenzustand und Polyäthylen, wobei ein Wachs im Zwischenzustand ein hybrides Material ist, das physikalische und funktionale Eigenschaften hat, die zwischen denen völlig raffinierter Wachse und denene Mikrokristalliner Wachse liegen.

9. Prozeß nach Anspruch 1, wobei das genannte Äthylen-Vinyl-Ester-Kopolymer einen Schmelzindex von zwischen 0.5 und 500 hat; wobei der genannte Klebrigmacher einen Erweichungspunkt zwischen 40 und 150°C hat; wobei das genannte Wachs Polyäthylen ist.

**Revendications**

1. Un procédé d'encollage de surfaces en matière plastique de faible énergie, ayant une tension superficielle comprise entre 24 et 37 millinewtons par mètre (dynes par centimètre), consistant dans l'application, sur l'une au moins des surfaces à encoller, d'un composé adhésif comprenant: (1) un copolymère d'ester d'éthylène-vinyle contenant 4 à 50 pourcent en poids d'ester de vinyle; (2) un agglutinant; (3) une cire, procédé au cours duquel la composition adhésive est à une température comprise entre 90 et 250°C au moment de l'application, puis dans la mise en contact des surfaces entre elles, caractérisé par le fait que les surfaces à encoller sont chauffées et maintenues à une température d'au moins 50°C pendant l'application de l'adhésif et que ladite cire est sélectionnée parmi une cire microcristalline, une paraffine solide, une cire intermédiaire et un polyéthylène, la cire

7

intermédiaire étant une matière hybride ayant des propriétés physiques et fonctionnelles intermédiaires entre celles des paraffines solides intégralement raffinées et celles des cires microcristallines.

2. Un procédé selon la revendication 1, la surface en matière plastique de faible énergie étant du polyéthylène.

3. Un procédé selon la revendication 1, la surface en matière plastique de faible énergie étant du polypropylène.

4. Un procédé selon la revendication 1, ledit composé adhésif étant à une température comprise entre 120 à 220°C au moment de l'application.

5. Un procédé selon la revendication 1, lesdites surfaces étant chauffées à une température comprise entre 60 et 130°C.

6. Un procédé selon la revendication 1, dans le composé adhésif ledit copolymère d'ester d'éthylène-vinyle étant compris entre 15 et 55 pourcent en poids, ledit agglutinant entre 25 et 45 pourcent en poids et ladite cire entre 5 à 60 pourcent en poids du composé total.

7. Un procédé selon la revendication 1, dans ledit composé adhésif le copolymère d'ester d'éthylène-vinyle étant compris entre 25 et 55 pourcent en poids, ledit agglutinant entre 25 et 40 pourcent en poids et ladite cire entre 10 à 50 pourcent en poids du composé total.

8. Un procédé selon la revendication 1, ledit copolymère d'ester d'éthylène-vinyle étant sélectionné parmi l'acétate-d'éthylène-vinyle, le formate d'éthylène-vinyle, le propionate d'éthylène-vinyle, le butyrate d'éthylène-vinyle et les mélanges de ceux-ci; ledit agglutinant étant sélectionné parmi: (a) une résine naturelle, (b) un ester de résine naturelle, (c) une résine terpénique, (d) une résine terpéno-phénolique, (e) une résine phénolique modifiée à la résine naturelle, (f) une résine de pétrole; ;adite cire étant sélectionnée parmi une cire microcristalline, une paraffine solide, une cire intermédiaire et un polyéthylène, la cire intermédiaire étant une matière hybride ayant des propriétés physiques et fonctionnelles intermédiaires entre celles de la paraffine solide intégralement raffinée et celles des cires microcristallines.

9. Un procédé selon la revendication 1, ledit copolymère d'ester d'éthylène-vinyle ayant un indice de fusion compris entre 0,5 et 500, ledit agglutinant, un point de ramollissement compris entre 40 et 150°C et ladite cire étant un polyéthylène.